# EUROPEAN PATENT SPECIFICATION

(11) **EP 3 957 555 B1**
(45) Date of publication and mention of the grant of the patent: **23.08.2023**
(21) Application number: 20855877.5
(22) Date of filing: 21.04.2020
(51) Int. Cl.: B62J 37/00

(54) **SADDLE-TYPE VEHICLE**
SATTELFAHRZEUG
VÉHICULE DE TYPE À SELLE

(30) Priority: 26.08.2019 IN 201941034241
(43) Date of publication of application: 23.02.2022
(73) Proprietor: HONDA MOTOR CO., LTD., Minato-ku Tokyo 107-8556 (JP)
(72) Inventor: HORIUCHI, Tetsu, Wako-shi, Saitama 351-0193 (JP); KUMAR, Rohit, Gurgaon, Haryana 122050 (IN); CHOPRA, Abhishek, Gurgaon, Haryana 122050 (IN)
(74) Representative: Feller, Frank
(86) International application number: PCT/JP2020/017214
(87) International publication number: WO 2021/038955

(56) References cited:
- WO-A1-2004/072469
- WO-A1-2019/116504
- CN-A- 106 515 937
- JP-A- 2003 120 455
- JP-A- 2004 001 757
- JP-U- H03 124 994

## Description

### BACKGROUND OF THE INVENTION

### Field of the Invention

The present invention relates to a saddle-type vehicle.

### Description of the Related Art

There has been conventionally known a saddle-type vehicle in which a fuel tank and a fuel pump are disposed to be spaced far apart from each other (see Japanese Patent Laid-Open No. 2009-40417).

### SUMMARY OF THE INVENTION

In JP 2003 120 455 A, on which the preamble of claim 1 is based, the fuel pump is directly attached to the fuel tank.

In JP 2004 001757 A, the fuel pump is attached to the body frame and is connected to the fuel tank by a fuel hose.

Japanese Patent Laid-Open No. 2009-40417 has a problem that it takes a lot of man-hours to assemble the fuel tank and the fuel pump and to subsequently connect the fuel pipe.

Accordingly, an object of the present invention is to provide a saddle-type vehicle capable of improving workability of assembling the fuel pump and the fuel tank, and connecting the pipe.

The invention provides a saddle-type vehicle according to claim 1.

The saddle-type vehicle comprises: a power unit (14) swingably supported on a vehicle body frame (11); a rear wheel (16) as a drive wheel integrated with the power unit (14); and a fuel pump (34) disposed above the rear wheel (16) and below a fuel tank (31), wherein the fuel pump (34) is supported on the vehicle body frame (11) through the fuel tank (31), supported by a stay (33) attached to a bottom surface (31b) of the fuel tank (31), and is disposed to be spaced apart by a predetermined distance from the bottom surface (31b) of the fuel tank (31).

In the above configuration, a central portion in a longitudinal direction of the fuel pump (34) may be supported at a distal end of the stay (33).

Further in the above configuration, an axis (34f) in the longitudinal direction of the fuel pump (34) may be oriented in a vehicle width direction and the central portion in the longitudinal direction of the fuel pump (34) may be detachably supported by a clamp portion (57) provided at the distal end of the stay (33).

Further in the above configuration, the fuel pump (34) may be covered from below and laterally by a fender (37) covering above the rear wheel (16).

Further in the above configuration, the fuel pump (34) is connected to a fuel joint (53) arranged in a direction orthogonal to the longitudinal direction, and the fuel joint (53) is provided at an end portion of a fuel pipe (71) extending to a fuel injection valve (25) and is interposed between the fuel pump (34) and the fuel tank (31).

Further in the above configuration, the stay (33) may be located closer to a front of the fuel tank (31) and a fuel pipe (77) extending rearwardly from the fuel pump (34) may be connected to a fuel outlet (31c) provided in a lower central portion of the fuel tank (31).

Further in the above configuration, the fuel pipe (71) may extend along the axis (34f) of the fuel pump (34), may further pass inside the vehicle body frame (11) on a vehicle body side, and may be guided to the fuel injection valve (25).

Further in the above configuration, the fuel joint (53) and a power supply connector (54) connected to the fuel pump (34) may be distributedly disposed on left and right sides of the stay (33).

The saddle-type vehicle is configured such that the fuel pump is supported on the vehicle body frame through the fuel tank, supported by the stay attached to the bottom surface of the fuel tank, and is disposed to be spaced apart by a predetermined distance from the bottom surface of the fuel tank. Thus, this configuration can facilitate pre-assembly of the fuel pump and the fuel tank and can improve workability of assembly. Further, when a pre-assembled set of the fuel tank and the fuel pump is integrally assembled to the vehicle body frame, the fuel pump is spaced apart by a predetermined distance from the fuel tank. Thus, this configuration can improve workability of connecting the pipe to the fuel tank and the fuel pump.

In the above configuration, the central portion in the longitudinal direction of the fuel pump is supported at the distal end of the stay. Thus, the above configuration is a structure for supporting the central portion in the longitudinal direction of the fuel pump by the stay in a well-balanced manner and can reduce the size of the stay.

Further in the above configuration, the axis in the longitudinal direction of the fuel pump is oriented in the vehicle width direction and the central portion in the longitudinal direction of the fuel pump is detachably supported by the clamp portion provided at the distal end of the stay. Thus, the above configuration can not only reduce the size of the stay but also improve assemblability and maintainability of the fuel pump.

Further in the above configuration, the fuel pump is covered from below and laterally by the fender covering above the rear wheel. Thus, the above configuration can prevent contamination of the fuel pump and the fuel pipe connected to the fuel pump and can reduce the number of special protective members.

Further in the above configuration, the fuel pump is connected to the fuel joint arranged in a direction orthogonal to the longitudinal direction and the fuel joint is provided at the end portion of the fuel pipe extending to the fuel injection valve and interposed between the fuel pump and the fuel tank. Thus, the above configuration can secure the arrangement space and the protection space of the fuel joint by the stay.

Further in the above configuration, the stay is located closer to the front of the fuel tank and the fuel pipe extending rearwardly from the fuel pump is connected to the fuel outlet provided in a lower central portion of the fuel tank. Thus, the above configuration can provide the fuel outlet at a position where fuel can be easily sucked with respect to the back-and-forth movement of fuel in the fuel tank and can reduce the length of the fuel pipe from the fuel pump to the fuel injection valve.

Further in the above configuration, the fuel pipe extends along the axis of fuel pump, further passes inside the vehicle body frame on a vehicle body side and is guided to the fuel injection valve. Thus, the above configuration can protect the high-pressure fuel pipe by the fuel tank, the fuel pump, and the vehicle body frame.

Further in the above configuration, the fuel joint and the power supply connector connected to the fuel pump are distributedly disposed on left and right sides of the stay. Thus, the above configuration can reduce the size of the fuel-related parts including the stay.

### BRIEF DESCRIPTION OF THE DRAWINGS

FIG. 1 is a left side view illustrating a motorcycle according to an embodiment of the present invention;
FIG. 2 is a left side view illustrating a vehicle body frame and a rear portion of the vehicle body;
FIG. 3 is a perspective view illustrating a fuel pump and its surroundings;
FIG. 4 is a front view illustrating the fuel pump and its surroundings;
FIG. 5 is a left side view illustrating a fuel tank, the fuel pump, and its surroundings;
FIG. 6 is a rear view illustrating the fuel tank, the fuel pump, and its surroundings;
FIG. 7 is a perspective view illustrating a support structure of the fuel pump by a stay as viewed from obliquely rearwardly;
FIG. 8 is a bottom surface view illustrating the fuel tank, the fuel pump, and its surroundings;
FIG. 9 is a plan view illustrating the fuel tank and its surroundings;
FIG. 10 is a sectional view taken along line X-X of FIG. 9;
FIG. 11 is a plan view illustrating the cross section of the fuel tank and a fuel gauge; and
FIG. 12 is a bottom surface view illustrating the fuel gauge.

### DETAILED DESCRIPTION OF THE PREFERRED EMBODIMENTS

Hereinafter, an embodiment of the present invention will be described with reference to the accompanying drawings. It should be noted that in the following description, the descriptions of directions such as front, rear, left, right, up, and down are the same as the directions with respect to a vehicle body of a motorcycle 10 unless otherwise specified. Further, in each drawing, the symbol FR denotes a frontward direction of the vehicle body, the symbol UP denotes an upward direction of the vehicle body, and the symbol LH denotes a leftward direction of the vehicle body.

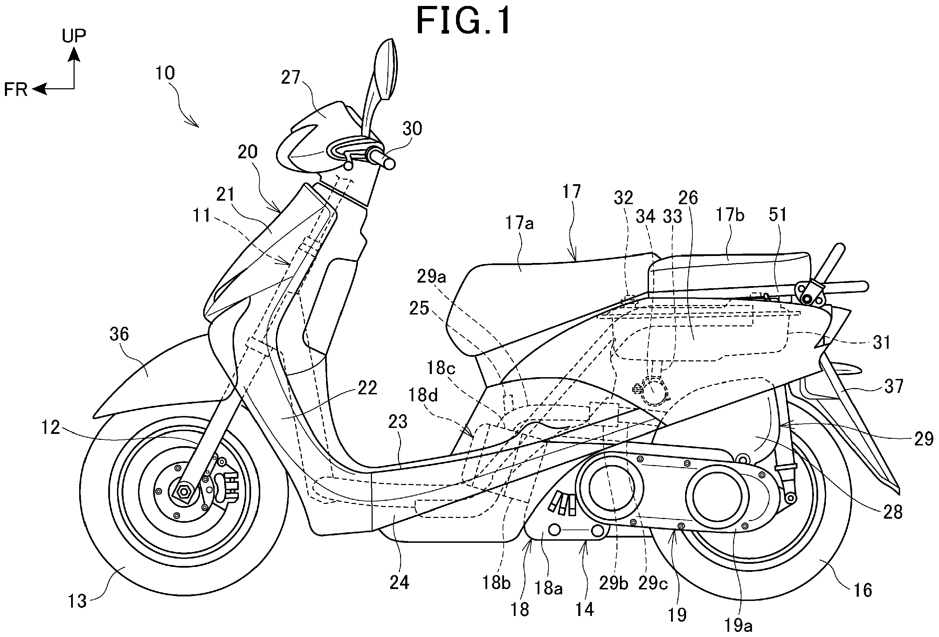

FIG. 1 is a left side view illustrating the motorcycle 10 according to an embodiment of the present invention.

The motorcycle 10 includes a vehicle body frame 11, a front wheel 13 supported at a front end portion of the vehicle body frame 11 through a front fork 12, and a rear wheel 16 supported in a lower portion of the vehicle body frame 11 through a power unit 14.

The motorcycle 10 is a saddle-type vehicle of a scooter-type, an occupant of which is seated on a seat 17 provided above the power unit 14 and the rear wheel 16. The motorcycle 10 includes a vehicle body cover 20 covering the vehicle body frame 11 and its surroundings.

The seat 17 includes a front seat 17a on which a driver sits, and a rear seat 17b on which a passenger sits.

The vehicle body cover 20 includes a front cover 21, a pair of left and right leg shields 22, a pair of left and right floor steps 23, a pair of left and right side skirts 24, a pair of left and right body covers 26, and a handle cover 27.

The front cover 21 covers a front side of the front fork 12. The left and right leg shields 22 are connected to both side edges of the front cover 21 and cover the leg portions of the driver sitting on the front seat 17a, from the front side. The left and right floor steps 23 extend rearwardly from the lower end portions of the left and right leg shields 22 and serve as foot-rests for the driver. The left and right side skirts 24 extend downwardly from both side edges of the left and right floor steps 23 respectively. The left and right body covers 26 cover below both side portions of the seat 17. The handle cover 27 covers the central portion of a handle 30 attached to an upper portion of the front fork 12.

The power unit 14 includes an engine 18 constituting the front portion and a continuously variable transmission 19 integrally provided in a rear portion of the engine 18. The power unit 14 is of a unit swing type in which an upper portion or a lower portion of a crankcase 18a is swingably supported on the vehicle body frame 11.

The engine 18 includes the crankcase 18a from which a cylinder portion 18d including a cylinder block 18b, a cylinder head 18c, and the like extends forward. The cylinder head 18c is connected to an intake device 29 including an air cleaner 28.

The intake device 29 includes an intake pipe 29a connected to an upper portion of the cylinder head 18c, a throttle body 29b connected to a rear end of the intake pipe 29a, and a connecting tube 29c connecting the throttle body 29b and the air cleaner 28.

The intake pipe 29a includes a fuel injection valve 25 for injecting fuel into a combustion chamber inside the cylinder portion 18d.

The continuously variable transmission 19 includes a transmission case 19a integrally provided in a rear end portion of the crankcase 18a. The rear wheel 16 is attached to the rear end portion of the transmission case 19a.

A fuel tank 31 attached to the rear portion of the vehicle body frame 11 is disposed in a rear portion of the front seat 17a and below the rear seat 17b.

A front portion of the upper portion of the fuel tank 31 includes a filler port (unillustrated) and a cap 32 for closing the filler port.

The fuel pump 34 is supported in a lower portion of the fuel tank 31 through the stay 33. The fuel tank 31 and the fuel pump 34 are covered by the vehicle body cover 20 including the left and right body covers 26 and the like from both sides.

The front wheel 13 is covered by a front fender 36 from above, and the rear wheel 16 is covered by a rear fender 37 from above.

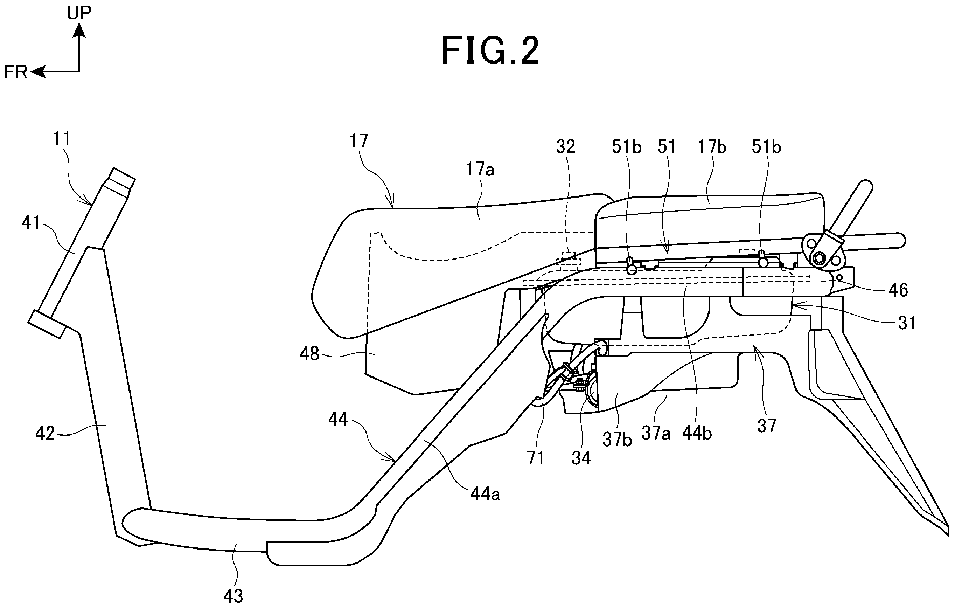

FIG. 2 is a left side view illustrating the vehicle body frame 11 and a rear portion of the vehicle body.

The vehicle body frame 11 includes a head pipe 41, a down frame 42, a pair of left and right lower frames 43, and a pair of left and right rear frames 44.

The head pipe 41 is provided at a front end portion of the vehicle body frame 11 and steerably supports the front fork 12 (see FIG. 1). The down frame 42 extends downwardly from the head pipe 41. The left and right lower frames 43 extend rearwardly from the left and right lower end portions of the down frames 42 respectively.

The left and right rear frames 44 extend rearwardly obliquely upwardly and rearwardly from the respective rear ends of the left and right down frames 42. Each of the left and right rear frames 44 includes an inclined portion 44a inclined upwardly rearwardly and a rear extension portion 44b extending rearwardly from a rear end of the inclined portion 44a.

The rear ends of the left and right rear frames 44 are integrally connected by a cross frame 46 extending in the vehicle width direction. The cross frame 46 constitutes a part of the vehicle body frame 11.

A lower portion of the storage box 48 is attached to the inclined portion 44a of the rear frame 44. The front seat 17a is supported on the storage box 48 in an openable and closable manner. When the front seat 17a is opened, the cap 32 of the fuel tank 31 is exposed. Thus, the fuel tank 31 can be refueled by removing the cap 32.

A rear subframe 51 having a U-shape in plan view is attached to the left and right rear extension portions 44b of the rear frames 44. The rear seat 17b is attached to the rear subframe 51.

The rear subframe 51 includes a plurality of hooks 51a for use in fixing a load placed on the rear seat 17b with a rope, a rubber band, or the like.

The fuel tank 31 is covered by the rear portion of the front seat 17a and the rear seat 17b from above. Further, the fuel tank 31 and the fuel pump 34 are covered by the rear fender 37 from below.

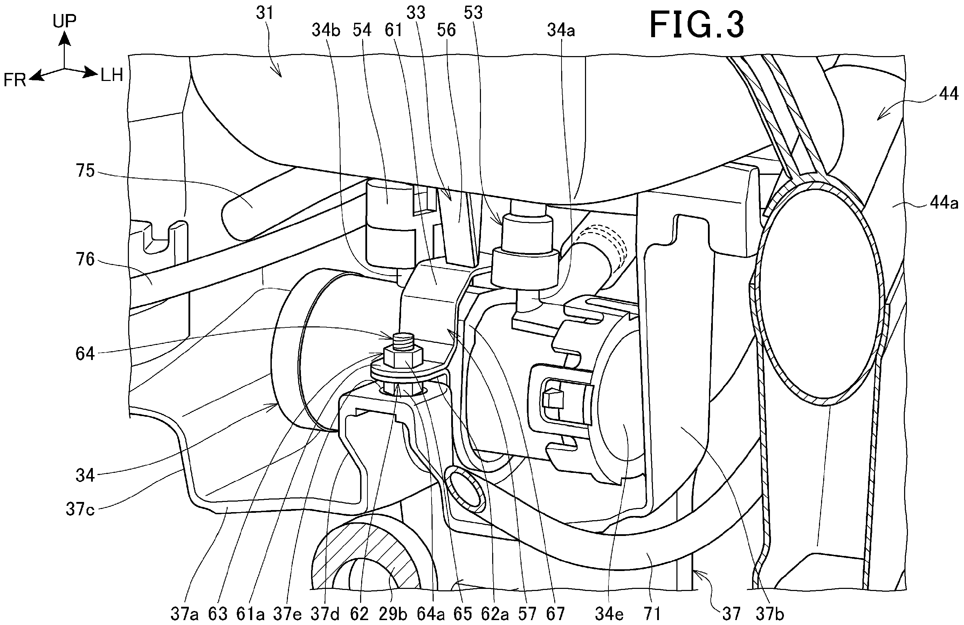

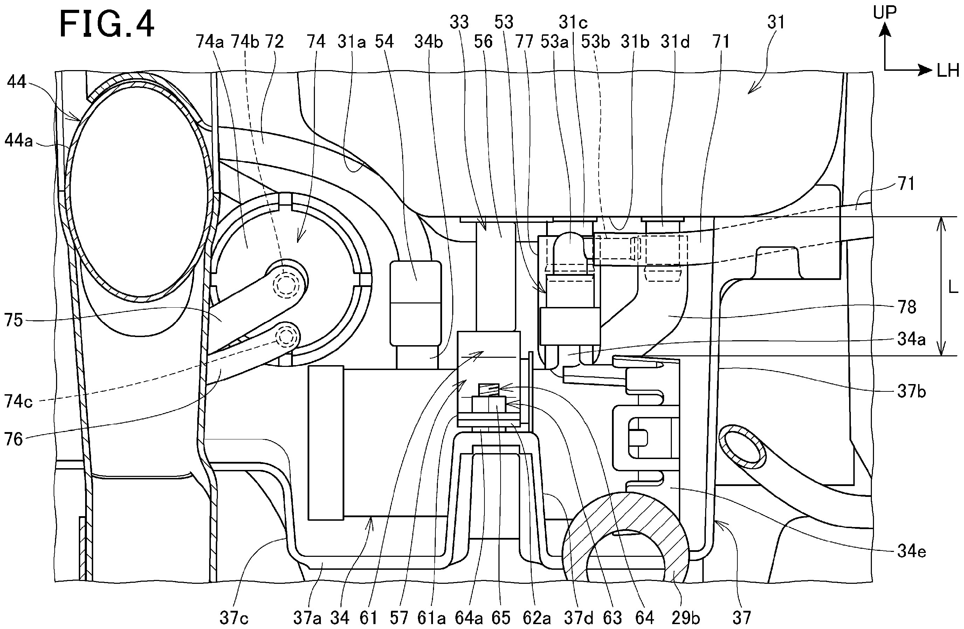

FIG. 3 is a perspective view illustrating the fuel pump 34 and its surroundings. FIG. 4 is a front view illustrating the fuel pump 34 and its surroundings.

As illustrated in FIGS. 3 and 4, the fuel pump 34 is formed in a cylindrical shape, whose longitudinal direction extends in the vehicle width direction. The central portion of the fuel pump 34 is clamped and supported by the lower portion of the stay 33.

An upper portion of the fuel pump 34 includes a pump discharge port 34a for discharging fuel and a harness connecting portion 34b for connecting a power supply wire harness 72 for supplying power to an electric motor provided inside the pump. The pump discharge port 34a and the harness connecting portion 34b are provided so as to sandwich the stay 33.

A fuel joint 53 provided at a distal end portion of the high-pressure fuel pipe 71 is connected to the pump discharge port 34a. A power supply connector 54 provided at a distal end portion of the power supply wire harness 72 is connected to the harness connecting portion 34b.

The stay 33 includes an upwardly/downwardly extending portion 56 extending downwardly from a bottom surface 31b of the fuel tank 31, and a clamp portion 57 attached to a lower end of the upwardly/downwardly extending portion 56 so as to clamp and fix the fuel pump 34.

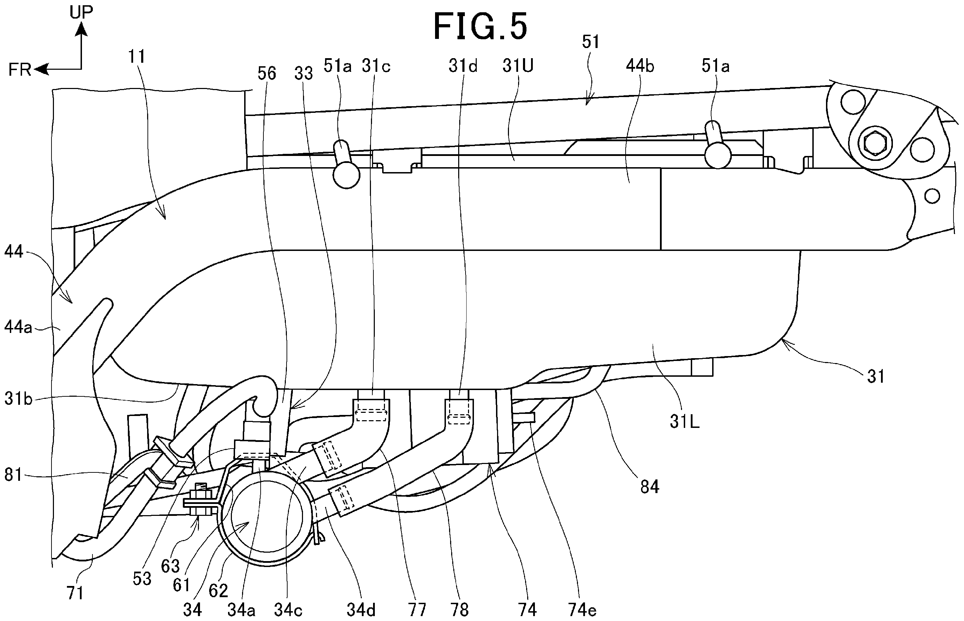

The clamp portion 57 includes a pair of plate-like upper half clamps 61 and lower half clamp 62 (see FIG. 5), each being formed to be curved in a substantially semicircular shape, and a fastening member 63 fastening each end portion of the upper half clamps 61 and the lower half clamp 62. The fastening member 63 includes a bolt 64 and a nut 65.

A front end portion 61a of the upper half clamp 61 is bent and extends forwardly and includes a bolt insertion hole (unillustrated) for inserting the bolt 64. A front end portion 62a of the lower half clamp 62 is bent and extends forwardly and includes a bolt insertion hole (unillustrated) for inserting the bolt 64.

The front end portion 61a of the upper half clamp 61 and the front end portion 62a of the lower half clamp 62 described above are fastened by the fastening member 63.

The clamp portion 57 clamps the fuel pump 34 through an elastic member 67 and elastically supports the fuel pump 34. The elastic member 67 is provided on an outer peripheral surface of the fuel pump 34 and made of rubber or the like.

A front portion of the rear fender 37 integrally includes a bottom wall 37a, a pair of left and right side walls 37b and 37c raised from both side edges of the bottom wall 37a, and an upwardly projecting portion 37d raised from the front portion of the bottom wall 37a and disposed in front of the lower half clamp 62.

The upwardly projecting portion 37d is formed in a reverse U shape in front view, and the upper portion of the upwardly projecting portion 37d includes a through-hole 37e through which the fastening member 63 (specifically, a head portion 64a of the bolt 64) is inserted. The through-hole 37e is a portion for avoiding interference between the head portion 64a of the bolt 64 and the upwardly projecting portion 37d.

Thus, the rigidity of the front portion of the rear fender 37 can be improved by providing the rear fender 37 with the upwardly projecting portion 37d.

Note that the clamp portion 57 may be fixed to and together with the upwardly projecting portion 37d by the fastening member 63. Thus, the stay 33 is supported by the fuel tank 31 and the rear fender 37, thereby improving the support rigidity for supporting the stay 33.

As illustrated in FIG. 4, the fuel pump 34 (specifically, an upper end portion of the most upwardly projecting cap member 34e in the fuel pump 34) is spaced downwardly by a predetermined distance L from the bottom surface 31b of the fuel tank 31.

The fuel joint 53 includes a joint body portion 53a connected to the pump discharge port 34a, and a pipe connection portion 53b bent outwardly in the vehicle width direction at right angles to the joint body portion 53a. One end of the high-pressure fuel pipe 71 is connected to the pipe connection portion 53b. The high-pressure fuel pipe 71 extends outwardly in the vehicle width direction from the pipe connection portion 53b, and the other end of the high-pressure fuel pipe 71 is connected to the fuel injection valve 25 (see FIG. 1).

The power supply wire harness 72 is connected to the harness connecting portion 34b. The power supply wire harness 72 extends upwardly obliquely laterally while being bent from the harness connecting portion 34b, and is connected to a battery (unillustrated) side.

Below one side (right side) of the fuel tank 31, there is disposed a cylindrical canister 74 that adsorbs evaporated fuel in the fuel tank 31 and then supplies the fuel to the intake device 29 (see FIG. 1) of the engine. A front end surface 74a of the canister 74 includes a forward projecting air inlet port 74b and a drain port 74c.

The air inlet port 74b is disposed at a center of the front end surface 74a and one end of the air introducing pipe 75 is connected to the air inlet port 74b. The air inlet port 74b is a portion for introducing air into the canister 74 through the air introducing pipe 75.

The drain port 74c is disposed below the air inlet port 74b on the front end surface 74a and connected to one end of the drain pipe 76. The drain port 74c is a portion for discharging water and the like inside the canister 74 to outside through the drain pipe 76.

A corner portion of the lower portion of the fuel tank 31 has a recessed portion 31a for securing a clearance between itself and the canister 74.

The canister 74 is disposed more rearward than the fuel pump 34 and the longitudinal direction of the canister 74 extends in the front-rear direction.

FIG. 5 is a left side view illustrating the fuel tank 31, the fuel pump 34, and its surroundings.

The fuel tank 31 is formed by joining flanges of an upper tank half body 31U and a lower tank half body 31L, each being formed in a concave shape and having a flange (unillustrated) formed in a peripheral edge portion.

A bottom surface 31b of the lower tank half body 31L includes a tank discharge port 31c for discharging fuel and a tank return port 31d in which fuel is returned from the fuel pump 34. The tank discharge port 31c and the tank return port 31d each protrude downwardly and a tank return port 31d is provided more rearward than the tank discharge port 31c.

The fuel pump 34 includes a fuel suction port 34c and a fuel return discharge port 34d projecting upwardly and rearwardly toward the tank discharge port 31c and the tank return port 31d of the fuel tank 31 respectively on the outer peripheral surface.

The fuel suction port 34c is a portion connected to the tank discharge port 31c through the fuel pipe 77 and sucking fuel from the fuel tank 31.

The fuel return discharge port 34d is connected to the tank return port 31d through the fuel pipe 78. When the fuel drawn into the fuel pump 34 from the fuel suction port 34c is supplied to the fuel injection valve 25 (see FIG. 1) from the pump discharge port 34a, the remaining fuel is returned from the fuel return discharge port 34d to the fuel tank 31 through the fuel pipe 78.

The stay 33 (specifically, the upwardly/downwardly extending portion 56) is disposed closer to the front of the bottom surface 31b of the lower tank half body 31L, and the fuel pump 34 is also disposed downward closer to the front of the fuel tank 31.

Further, the fuel pump 34 is disposed to be spaced apart by a predetermined distance from the bottom surface 31b of the fuel tank 31. Separating the fuel pump 34 downwardly from the fuel tank 31 in this manner can facilitate connection of the fuel pipes 77 and 78 between the fuel tank 31 and the fuel pump 34, and connection of the fuel joint 53 and the power supply connector 54 (see FIG. 4) to the fuel pump 34.

Further, in the state in which the fuel pump 34 is pre-assembled to the fuel tank 31 and the fuel joint 53, the power supply connector 54, and the fuel pipes 77 and 78 are connected, the fuel tank 31 can be attached to the vehicle body frame 11, which can improve workability of assembly.

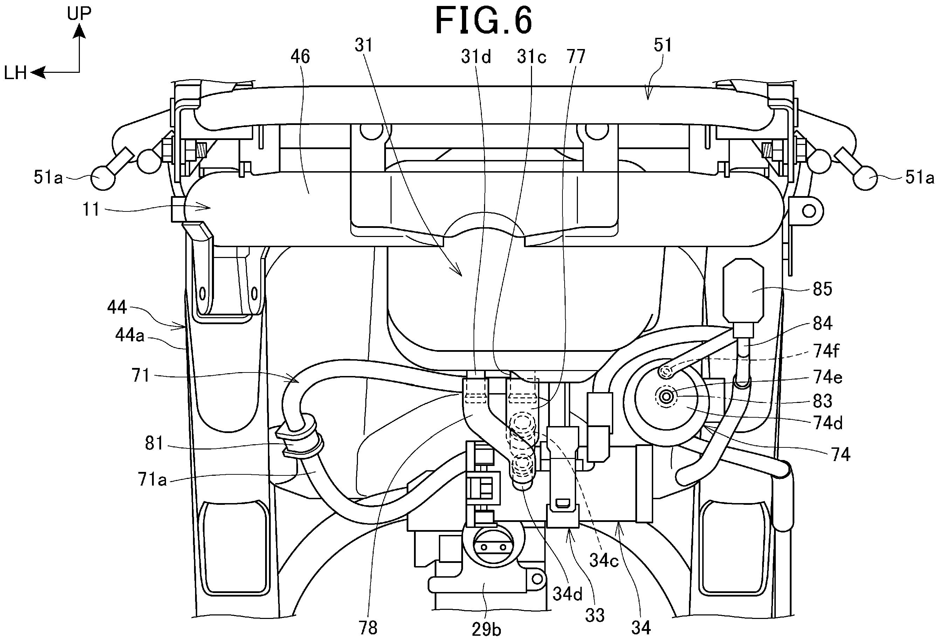

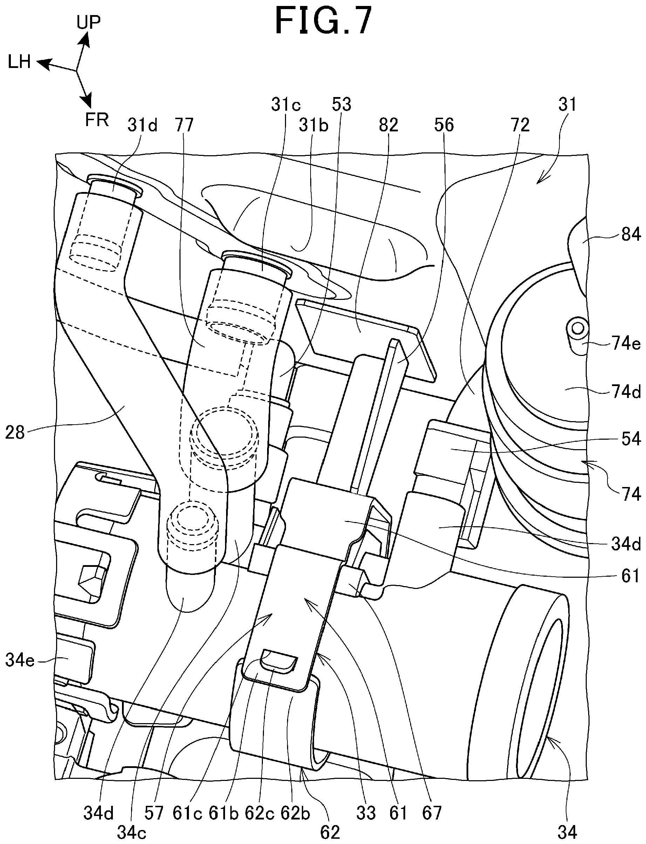

FIG. 6 is a rear view illustrating the fuel tank 31, the fuel pump 34, and its surroundings. FIG. 7 is a perspective view illustrating a support structure of the fuel pump 34 by the stay 33 as viewed from obliquely rearwardly.

As illustrated in FIG. 6, the tank discharge port 31c and the tank return port 31d of the fuel tank 31 are disposed offset in the vehicle width direction in rear view. The tank return port 31d is located on a side (left side) of the tank discharge port 31c in rear view.

The fuel suction port 34c and the fuel return discharge port 34d of the fuel pump 34 are arranged side by side in an up-down direction in rear view.

As a result, in rear view, the fuel pipe 77 extends in the up-down direction and the fuel pipe 78 is inclined (downward to the right) in the middle.

The high-pressure fuel pipe 71 extends laterally (to the left side) from the fuel joint 53 (see FIG. 5), further extends forwardly obliquely downwardly while being bent more inside in the vehicle width direction than the inclined portion 44a of the rear frame 44, further extends forward while being bent inside in the vehicle width direction, and is connected to the fuel injection valve 25 (see FIG. 1). An inclined extension portion 71a of the high-pressure fuel pipe 71 extending forwardly obliquely downwardly is supported by a pipe support member 81 attached to the inclined portion 44a of the rear frame 44.

The canister 74 has a rear end surface 74d which includes a rearward projecting charge port 74e and a purge port 74f.

The charge port 74e is provided at a center of the rear end surface 74d and is connected to one end of a charge pipe 83. The charge port 74e is a portion in which the evaporated fuel inside the fuel tank 31 is drawn into the canister 74 through the charge pipe 83.

The purge port 74f is located above the charge port 74e on the rear end surface 74d and is connected to one end of the purge pipe 84. The purge port 74f is connected to the intake pipe 29a (see FIG. 1) of the engine 18 (see FIG. 1) through the purge pipe 84. The purge port 74f is a portion for discharging the evaporated fuel to the intake device 29 (see FIG. 1) of the engine 18. A purge control valve 85 is provided in the middle of the purge pipe 84 to control the amount of introduced evaporated fuel (purge amount) according to the operating state of the engine 18.

As illustrated in FIG. 7, a reinforcing plate 82 is fixed to the bottom surface 31b of the fuel tank 31, and the stay 33 (specifically, the upwardly/downwardly extending portion 56) is attached to the reinforcing plate 82.

The upwardly/downwardly extending portion 56 has an L-shaped cross section. An upper end surface of the upwardly/downwardly extending portion 56 is attached to the reinforcing plate 82, and a lower end surface of the upwardly/downwardly extending portion 56 is attached to an upper end portion of the upper half clamp 61 of the clamp portion 57.

An upper portion of the elastic member 67 is sandwiched between the upper half clamp 61 and an upper portion of the fuel pump 34.

A locking hole 61c is formed in a rear end portion 61b of the upper half clamp 61, and a downwardly bent locking claw 62c is formed in the rear end portion 62b of the lower half clamp 62. The locking claw 62c is inserted into and engaged with the locking hole 61c.

The fuel pump 34 includes a cap member 34e attachable to and detachable from one end portion (left-side end portion). By removing the cap member 34e, a fuel filter stored inside the fuel pump 34 can be replaced or cleaned.

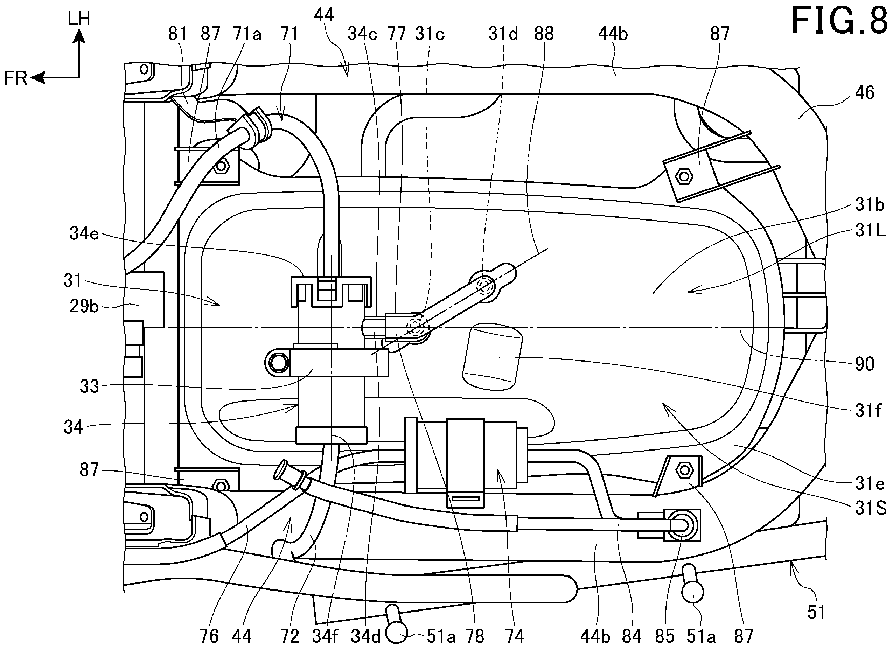

FIG. 8 is a bottom surface view illustrating the fuel tank 31, the fuel pump 34, and its surroundings.

The fuel tank 31 includes a flange portion 31e formed in the upper tank half body 31U (see FIG. 5) and the lower tank half body 31L. The flange portion 31e is attached to the rear frame 44 and the cross frame 46 by a plurality of tank brackets 87.

In bottom view, a straight line 88 passing through the center of each of the tank discharge port 31c and the tank return port 31d of the fuel tank 31 is inclined with respect to the front-rear direction. More specifically, the tank return port 31d is disposed offset closer to one side (left side) than the tank discharge port 31c. In bottom view, the tank discharge port 31c is disposed on a tank center line 90 passing through the center of the width in the vehicle width direction of the fuel tank 31 and extending in the front-rear direction, and the tank return port 31d is disposed closer to one side (left side) than the tank center line 90.

In bottom view, the fuel pipe 77 extends rearwardly from the fuel suction port 34c of the fuel pump 34, and the fuel pipe 78 extends rearwardly obliquely to the left from the fuel return discharge port 34d of the fuel pump 34.

As described above, by causing the tank return port 31d to be offset closer to one side than the tank center line 90, a wide space can be formed in the bottom surface 31b on the other side (right side) of the tank return port 31d. In this space, there is formed a downwardly protruding bottom surface protruding portion 31f having an oval or rice bale-shaped profile. The bottom surface protruding portion 31f will be described in detail later.

The stay 33 and the fuel pump 34 are located below a portion closer to the front of the fuel tank 31. This can reduce the length of the high-pressure fuel pipe 71 connecting the fuel pump 34 and the fuel injection valve 25 (see FIG. 1).

Further, the fuel pump 34 is located more inside the width in the vehicle width direction of the fuel tank 31 (specifically more inside the width in the vehicle width direction of the protruding portion 31S excluding the flange portion 31e of the upper tank half body 31U and the lower tank half body 31L).

The stay 33 is disposed offset closer to one side (right side) in the vehicle width direction than the tank center line 90. This can secure a long distance for bending the high-pressure fuel pipe 71 from the vehicle width direction to the forward direction and can comfortably bend the high-pressure fuel pipe 71.

The fuel pump 34 is disposed such that its longitudinal direction (specifically, the axis 34f extending in the longitudinal direction) is the vehicle width direction. In bottom view, the high-pressure fuel pipe 71 extends from one end (left end) of the fuel pump 34 to outside in the vehicle width direction, then is bent forward with its inclined extension portion 71a being supported by the pipe support member 81, then further extends forward obliquely inward in the vehicle width direction, and is connected to the fuel injection valve 25.

In bottom view, the fuel suction port 34c and the fuel return discharge port 34d of the fuel pump 34 are disposed on the tank center line 90.

In bottom view, the canister 74 is disposed such that its longitudinal direction is the front-rear direction, and is disposed more inside in the vehicle width direction than one (right) rear frame 44.

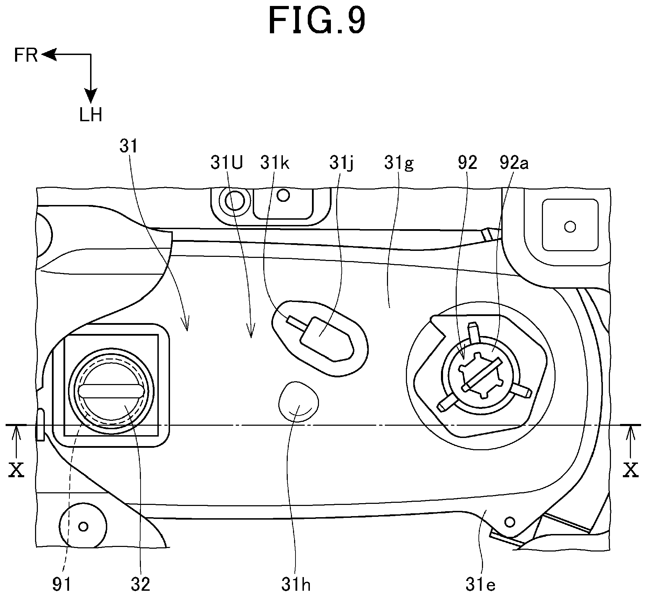

FIG. 9 is a plan view illustrating the fuel tank 31 and its surroundings.

The upper surface 31g of the upper tank half body 31U of the fuel tank 31 includes a front portion and a rear portion. A filler port 91 and the cap 32 are provided in the front portion and the fuel gauge 92 (specifically a main body portion 92a of the fuel gauge 92) is provided in the rear portion.

Further, the upper surface 31g of the upper tank half body 31U includes an upwardly protruding upper surface protruding portion 31h having circular or substantially circular profile, and a gas-liquid separation unit 31j disposed on a side of the upper surface protruding portion 31h. The upper surface protruding portion 31h will be described in detail later. The gas-liquid separation unit 31j is a portion for separating evaporated fuel in the fuel tank 31 from liquid fuel. The discharge port 31k provided in the gas-liquid separation unit 31j is connected to the charge port 74e of the canister 74 through the charge pipe 83 as illustrated in FIG. 6.

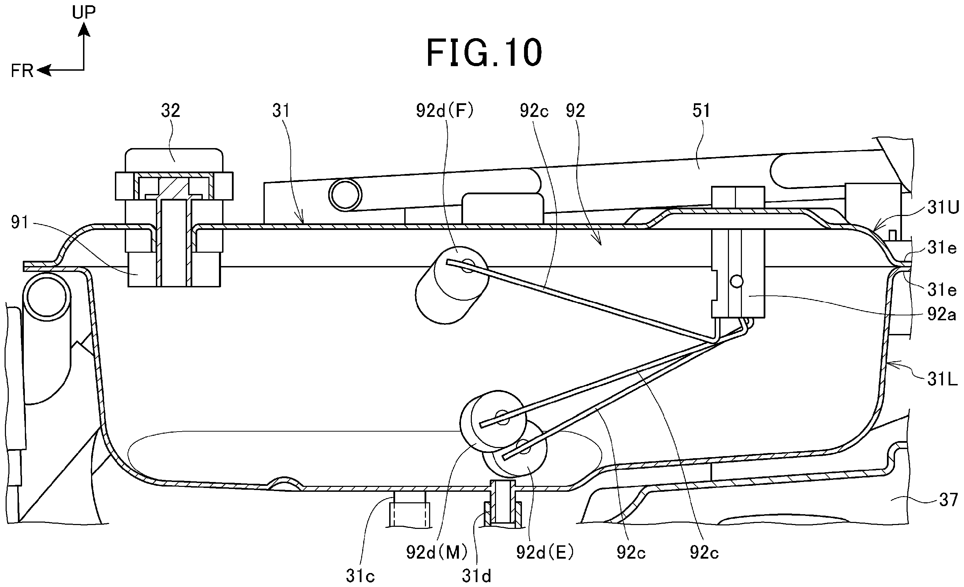

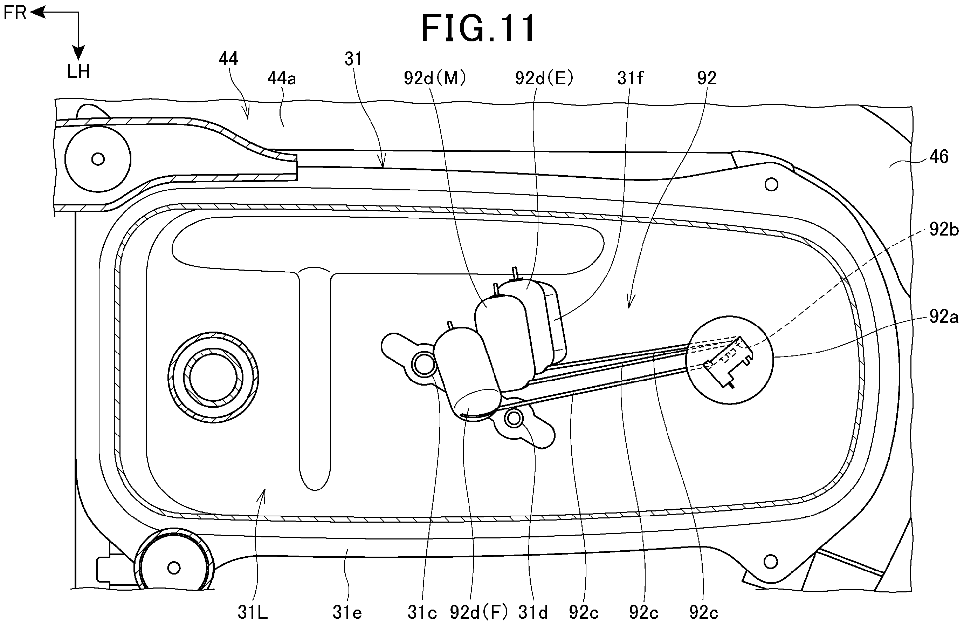

FIG. 10 is a sectional view taken along line X-X of FIG. 9. FIG. 11 is a plan view illustrating the cross section of the fuel tank 31 and the fuel gauge 92.

As illustrated in FIG. 10, the fuel gauge 92 includes a main body portion 92a attached to the upper tank half body 31U, a sensor unit 92b (see FIG. 11) provided in the main body portion 92a, an arm 92c extending from the sensor unit 92b, and a float 92d attached to a distal end portion of the arm 92c.

The float 92d is a component for detecting the height of a liquid surface changing in a state in which the fuel floats on the liquid surface. When the float 92d moves up and down according to the height of the liquid surface, the sensor unit 92b converts the swing angle of the arm 92c into, for example, an electrical resistance. Since the remaining amount of fuel has a predetermined relationship with the electrical resistance, the remaining amount of fuel can be obtained from the electrical resistance.

In FIG. 10, a float 92d(F) indicates a state in which the fuel tank is full, a float 92d(E) indicates a state in which the fuel tank is empty, and a float 92d(M) indicates a state in which the fuel tank is in the middle of full and empty.

The height of the float 92d(E) indicates that a small amount of fuel remains at the bottom of the fuel tank 31.

FIG. 11 illustrates the fuel gauge 92 in the same state as in FIG. 10. Specifically, the float 92d(F), the float 92d(E), and the float 92d(M) are located on the same respective positions and heights illustrated in FIG. 10.

In FIGS. 10 and 11, the longitudinal direction of the float 92d(F) is greatly inclined with respect to the horizontal direction. Further, the longitudinal direction of the float 92d(E) is slightly inclined with respect to the horizontal direction or extends in the horizontal direction.

As described above, the orientation (inclination in the longitudinal direction) of the float 92d changes from the position of the float 92d(F) to the position of the float 92d(E). For this reason, at the position of the float 92d(F) and the position of the float 92d(E), in order to secure a clearance between itself and the upper tank half body 31U and the lower tank half body 31L, the upper surface protruding portion 31h (see FIG. 9) having circular or substantially circular profile is provided in the upper tank half body 31U, and the bottom surface protruding portion 31f having an oval or rice bale-shaped profile is provided in the lower tank half body 31L.

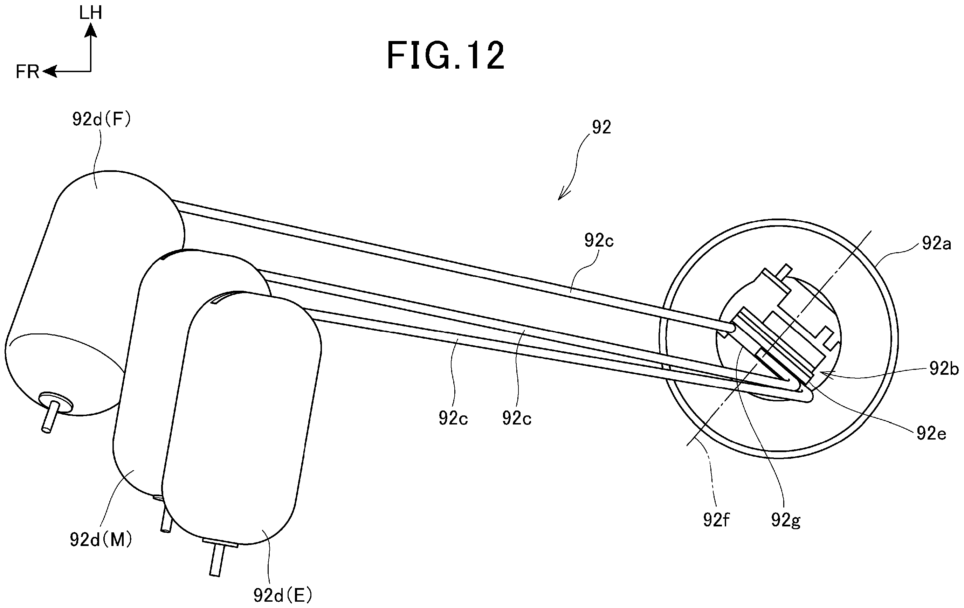

FIG. 12 is a bottom surface view illustrating the fuel gauge 92.

A sensor unit 92b of the fuel gauge 92 includes a sensor base portion 92e provided in the main body portion 92a, and a swing portion 92g swingably provided in the sensor base portion 92e.

The swing portion 92g swings about a swing axis 92f with respect to the sensor base portion 92e.

One of the sensor base portion 92e and the swing portion 92g includes a contact point (unillustrated) and the other of the sensor base portion 92e and the swing portion 92g includes a resistance member (unillustrated) contacting the contact point described above.

Further, an end portion of the arm 92c is fixed to the swing portion 92g. Therefore, when the height of the float 92d changes according to the amount of fuel, the swing portion 92g swings through the arm 92c and the contact point described above moves relative to the resistance member. This changes an electrical resistance value between the contact point described above and the resistance member. Thus, the amount of fuel can be obtained from the electrical resistance value.

As illustrated in FIGS. 1, 4, and 5, the motorcycle 10 as a saddle-type vehicle includes the power unit 14 swingably supported on the vehicle body frame 11, the rear wheel 16 as a drive wheel integrated with the power unit 14, and the fuel pump 34 disposed above the rear wheel 16 and below the fuel tank 31.

The fuel pump 34 is supported on the vehicle body frame 11 through the fuel tank 31, supported by the stay 33 attached to the bottom surface 31b of the fuel tank 31, and is disposed to be spaced apart by a predetermined distance from the bottom surface 31b of the fuel tank 31.

This configuration can facilitate pre-assembly of the fuel tank 31 and the fuel pump 34 and can improve workability of assembly. Further, when a pre-assembled set of the fuel tank 31 and the fuel pump 34 is integrally assembled to the vehicle body frame 11, the fuel pump 34 is spaced apart by a predetermined distance L from the fuel tank 31. Thus, this configuration can improve workability of connecting the fuel pipes 77 and 78, the high-pressure fuel pipe 71, and the power supply wire harness 72 to the fuel tank 31 and the fuel pump 34.

Further, the pre-assembled set of the fuel tank 31 and the fuel pump 34 is connected to the fuel pipes 77 and 78 and the high-pressure fuel pipe 71. Thus, when the pre-assembled fuel tank 31 is assembled to the vehicle body frame 11, foreign matter can be prevented from entering the fuel pipes 77 and 78 and the high-pressure fuel pipe 71.

As illustrated in FIG. 7, the central portion in the longitudinal direction of the fuel pump 34 is supported at the distal end of the stay 33.

This configuration is a structure for supporting the central portion in the longitudinal direction of the fuel pump 34 by the stay 33 in a well-balanced manner and can reduce the size of the stay 33.

As illustrated in FIGS. 3, 7, and 8, the axis 34f in the longitudinal direction of the fuel pump 34 is oriented in the vehicle width direction and the central portion in the longitudinal direction of the fuel pump 34 is detachably supported by the clamp portion 57 provided at the distal end of the stay 33.

This configuration can not only reduce the size of the stay 33 but also improve assemblability and maintainability of the fuel pump 34.

As illustrated in FIGS. 2 to 4, the fuel pump 34 is covered from below and laterally by the rear fender 37 as a fender covering above the rear wheel 16.

This configuration can prevent contamination of the fuel pump 34 and the fuel pipes 77 and 78 and the high-pressure fuel pipe 71 connected to the fuel pump 34 and can reduce the number of special protective members.

As illustrated in FIGS. 1, 4, and 5, the fuel pump 34 is connected to the fuel joint 53 arranged in a direction orthogonal to the longitudinal direction, and the fuel joint 53 is provided at the end portion of the high-pressure fuel pipe 71 as the fuel pipe extending to the fuel injection valve 25 and interposed between the fuel tank 31 and the fuel pump 34.

This configuration can secure the arrangement space and the protection space of the fuel joint 53 by the stay 33.

As illustrated in FIGS. 5 and 8, the stay 33 is located closer to the front of the fuel tank 31, and the fuel pipe 77 extending rearwardly from the fuel pump 34 is connected to the tank discharge port 31c as the fuel outlet provided in the lower central portion of the fuel tank 31.

This configuration can provide the tank discharge port 31c at a position where fuel can be easily sucked with respect to the back-and-forth movement of fuel in the fuel tank 31 and can reduce the length of the high-pressure fuel pipe 71 from the fuel pump 34 to the fuel injection valve 25.

As illustrated in FIGS. 1 and 8, the high-pressure fuel pipe 71 extends along the axis 34f of the fuel pump 34, further passes inside the vehicle body frame 11 (specifically the rear frame 44) on a vehicle body side, and is guided to the fuel injection valve 25.

This configuration can protect the high-pressure fuel pipe 71 by the fuel tank 31, the fuel pump 34, and the vehicle body frame 11.

As illustrated in FIG. 4, the fuel joint 53 and the power supply connector 54 connected to the fuel pump 34 are distributedly disposed on the left and right sides of the stay 33.

This configuration can reduce the size of the fuel-related parts including the stay 33.

The present invention can be applied not only to the motorcycle 10 but also to a saddle-type vehicle including those other than the motorcycle 10.

- 10: motorcycle (saddle-type vehicle)
- 11: vehicle body frame
- 14: power unit
- 16: rear wheel
- 25: fuel injection valve
- 31: fuel tank
- 31b: bottom surface of the fuel tank
- 31c: tank discharge port (fuel outlet)
- 33: stay
- 34: fuel pump
- 34f: axis of the fuel pump
- 37: rear fender (fender)
- 53: fuel joint
- 54: power supply connector
- 57: clamp portion
- 71: high-pressure fuel pipe (fuel pipe)

## Claims

1. A saddle-type vehicle comprising:
a power unit (14) swingably supported on a vehicle body frame (11); a rear wheel (16) as a drive wheel integrated with the power unit (14); and a fuel pump (34) disposed above the rear wheel (16) and below a fuel tank (31), wherein
the fuel pump (34) is supported on the vehicle body frame (11) through the fuel tank (31), **characterized in that**
the fuel pump (34) is clamped and fixed to a clamp portion (57) of a stay (33) so that the fuel pump (34) is supported by the stay (33), the stay(33) includes an upwardly/downwardly extending portion (56) that is attached to a bottom surface (31b) of the fuel tank (31) and that extends downwardly from the bottom surface (31b) side, and the clamp portion (57) that is attached to a lower end of the upwardly/downwardly extending portion (56),
the fuel pump (34) is disposed so as an upper end portion of a most upwardly projecting cap member (34e) in the fuel pump (34) is spaced downwardly by a predetermined distance (L) from the bottom surface (31b) of the fuel tank (31) in fornt view,
the fuel pump (34) is connected to a fuel joint (53) arranged in a direction orthogonal to the longitudinal direction and the fuel joint (53) is provided at an end portion of a fuel pipe (71) extending to a fuel injection valve (25) and is interposed between the fuel pump (34) and the fuel tank (31), and
the fuel joint (53) includes a joint body portion (53a) connected to the pump discharge port (34a), and a pipe connection portion (53b) bent outwardly in a vehicle width direction at a right angle to the joint body portion (53a) and connected to the fuel pipe (71).

2. The saddle-type vehicle according to claim 1, wherein a central portion in a longitudinal direction of the fuel pump (34) is supported at a distal end of the stay (33).

3. The saddle-type vehicle according to claim 1 or 2, wherein an axis (34f) in the longitudinal direction of the fuel pump (34) is oriented in the vehicle width direction and the central portion in the longitudinal direction of the fuel pump (34) is detachably supported by the clamp portion (57) provided at the distal end of the stay (33).

4. The saddle-type vehicle according to any one of claims 1 to 3, wherein the fuel pump (34) is covered from below and laterally by a fender (37) covering above the rear wheel (16).

5. The saddle-type vehicle according to any one of claims 1 to 4, wherein the stay (33) is located closer to a front of the fuel tank (31) and a fuel pipe (77) extending rearwardly from the fuel pump (34) is connected to a fuel outlet (31c) provided in a lower central portion of the fuel tank (31).

6. The saddle-type vehicle according to claim 5, wherein the fuel pipe (71) extends along the axis (34f) of the fuel pump (34), further passes inside the vehicle body frame (11) on a vehicle body side, and is guided to the fuel injection valve (25).

7. The saddle-type vehicle according to any one of claims 1 to 6, wherein the fuel pump (34) includes the pump discharge port (34a) and a harness connecting portion (34b) for connecting a power supply wire harness (72) for supplying power to an electric motor provided inside the fuel pump (34),
the pump discharge port (34a) and the harness connecting portion (34b) are provided so as to sandwich the stay (33), and
a power supply connector (54) that is provided at a distal end portion of the power supply wire harness (72) is connected to the harness connecting portion (34b).

## Patentansprüche

1. Sattelfahrzeug, umfassend:
eine Antriebseinheit (14), die an einem Fahrzeugrumpfrahmen (11) schwenkbar gelagert ist; ein Hinterrad (16) als Antriebsrad, das mit der Antriebseinheit (14) integriert ist; und eine Kraftstoffpumpe (34) über dem Hinterrad (6) und unter einem Kraftstofftank (31) angeordnet ist, wobei
die Kraftstoffpumpe (34) an dem Fahrzeugrumpfrahmen (11) durch den Kraftstofftank (31) getragen ist, **dadurch gekennzeichnet, dass**
die Kraftstoffpumpe (34) an einem Klemmabschnitt (57) einer Strebe (33) geklemmt und fixiert ist, sodass die Kraftstoffpumpe (34) von der Strebe (33) getragen wird, wobei die Strebe (33) einen sich aufwärts/abwärts erstreckenden Abschnitt (56) enthält, der an einer Bodenfläche (31b) des Kraftstofftanks (31) angebracht ist und der sich von der Bodenflächen (31b)-Seite nach unten erstreckt, und den Klemmabschnitt (57), der an einem unteren Ende des sich aufwärts/abwärts erstreckenden Abschnitts (56) angebracht ist,
die Kraftstoffpumpe (34) so angeordnet ist, dass, in Vorderansicht, ein oberer Endabschnitt eines ganz nach oben vorstehenden Kappenelements (34e) in der Kraftstoffpumpe (34) mit einem vorbestimmten Abstand (L) unterhalb der Bodenfläche (31b) des Kraftstofftanks (31) angeordnet ist,
die Kraftstoffpumpe (34) mit einer Kraftstoffkupplung (53) verbunden ist, die in Richtung orthogonal zur Längsrichtung angeordnet ist, und die Kraftstoffkupplung (53) an einem Endabschnitt des Kraftstoffrohrs (71) vorgesehen ist, das sich zu einem Kraftstoffeinspritzventil (25) erstreckt und zwischen der Kraftstoffpumpe (34) und dem Kraftstofftank (31) eingefügt ist, und
die Kraftstoffkupplung (53) einen Kupplungskörperabschnitt (53a) enthält, der mit der Pumpenauslassöffnung (34a) verbunden ist, sowie einen Rohrverbindungsabschnitt (53b), der in Fahrzeugbreitenrichtung rechtwinklig zu dem Kupplungskörperabschnitt (53a) auswärts gebogen ist und mit dem Kraftstoffrohr (71) verbunden ist.

2. Das Sattelfahrzeug nach Anspruch 1, wobei ein in Längsrichtung mittlerer Abschnitt der Kraftstoffpumpe (34) an einem distalen Ende der Strebe (33) gelagert ist.

3. Das Sattelfahrzeug nach Anspruch 1 oder 2, wobei eine Achse (34f) in der Längsrichtung der Kraftstoffpumpe (34) in der Fahrzeugbreitenrichtung orientiert ist, und der in der Längsrichtung mittlere Abschnitt der Kraftstoffpumpe (34) durch den am distalen Ende der Strebe (33) vorgesehenen Klemmabschnitt (57) lösbar getragen ist.

4. Das Sattelfahrzeug nach einem der Ansprüche 1 bis 3, wobei die Kraftstoffpumpe (34) durch einen das Hinterrad (16) oben abdeckenden Fender (37) von unten und seitlich abgedeckt ist.

5. Das Sattelfahrzeug nach einem der Ansprüche 1 bis 4, wobei die Strebe (33) näher an einer Front des Kraftstofftanks (31) angeordnet ist und ein sich von der Kraftstoffpumpe (34) nach hinten erstreckendes Kraftstoffrohr (77) mit einem Kraftstoffauslass (31c) verbunden ist, der in einem unteren mittleren Abschnitt des Kraftstofftanks (31) vorgesehen ist.

6. Das Sattelfahrzeug nach Anspruch 5, wobei sich das Kraftstoffrohr (71) entlang der Achse (34f) der Kraftstoffpumpe (34) erstreckt und weiter innerhalb des Fahrzeugrumpfrahmens (11) an einer Fahrzeugrumpfseite verläuft und zu dem Kraftstoffeinspritzventil (25) geführt ist.

7. Das Sattelfahrzeug nach einem der Ansprüche 1 bis 6, wobei die Kraftstoffpumpe (34) die Pumpenauslassöffnung (34a) sowie einen Kabelverbindungsabschnitt (34b) enthält, um ein Stromversorgungskabel (72) anzuschließen, um einem innerhalb der Kraftstoffpumpe (34) vorgesehenen Elektromotor Strom zuzuführen,
die Pumpenauslassöffnung (34a) und der Kabelverbindungsabschnitt (34b) so vorgesehen sind, dass sie die Strebe (33) zwischen sich aufnehmen, und
ein Stromversorgungsstecker (34), der am distalen Endabschnitt des Stromversorgungskabels (72) vorgesehen ist, mit dem Kabelverbindungsabschnitt (34b) verbunden ist.

## Revendications

1. Véhicule du type à selle comprenant :
un bloc d'alimentation (14) supporté de manière oscillante sur un cadre de corps de véhicule (11) ; une roue arrière (16) en tant que roue motrice intégrée au bloc d'alimentation (14) ; et une pompe à carburant (34) disposée au-dessus de la roue arrière (16) et au-dessous d'un réservoir de carburant (31), dans lequel
la pompe à carburant (34) est supportée sur le cadre de corps de véhicule (11) par l'intermédiaire du réservoir de carburant (31), **caractérisé en ce que**
la pompe à carburant (34) est serrée et fixée sur une partie de serrage (57) d'un support (33) de sorte que la pompe à carburant (34) est supportée par le support (33),
le support (33) comporte une partie s'étendant vers le haut/vers le bas (56) qui est solidaire d'une surface inférieure (31b) du réservoir de carburant (31) et qui s'étend vers le bas à partir du côté de surface inférieure (31b), et la partie de serrage (57) qui est solidaire d'une extrémité inférieure de la partie s'étendant vers le haut/vers le bas (56),
la pompe à carburant (34) est disposée de manière à ce qu'une partie d'extrémité supérieure d'un élément de capuchon (34e) faisant saillie vers le haut dans la pompe à carburant (34) soit espacée vers le bas par une distance (L) prédéterminée à partir de la surface inférieure (31b) du réservoir de carburant (31) dans la vue avant,
la pompe à carburant (34) est connectée à un joint de carburant (53) agencé dans une direction perpendiculaire à la direction longitudinale et le joint de carburant (53) est prévu au niveau d'une partie d'extrémité d'un tuyau d'alimentation en carburant (71) s'étendant vers une soupape d'injection de carburant (25) et est interposé entre la pompe à carburant (34) et le réservoir de carburant (31),
et
le joint de carburant (53) comporte une partie de corps de joint (53a) connectée à l'orifice d'évacuation de pompe (34a), et une partie de connexion de tuyau (53b) fléchie vers l'extérieur dans une direction de largeur de véhicule à angle droit par rapport à la partie de corps de joint (53a) et connectée au tuyau d'alimentation en carburant (71).

2. Véhicule du type à selle selon la revendication 1, dans lequel une partie centrale dans une direction longitudinale de la pompe à carburant (34) est supportée au niveau d'une extrémité distale du support (33).

3. Véhicule du type à selle selon la revendication 1 ou 2, dans lequel un axe (34f) dans la direction longitudinale de la pompe à carburant (34) est orienté dans la direction en largeur de véhicule et la partie centrale dans la direction longitudinale de la pompe à carburant (34) est supportée de manière détachable par la partie de serrage (57) prévue au niveau de l'extrémité distale du support (33).

4. Véhicule du type à selle selon l'une quelconque des revendications 1 à 3, dans lequel la pompe à carburant (34) est recouverte par le dessous et latéralement par un pare-chocs (37) recouvrant le dessus de la roue arrière (16).

5. Véhicule du type à selle selon l'une quelconque des revendications 1 à 4, dans lequel le support (33) est situé plus près d'un avant du réservoir de carburant (31) et un tuyau d'alimentation en carburant (77) s'étendant vers l'arrière à partir de la pompe à carburant (34) est connecté à une sortie de carburant (31c) prévue dans une partie centrale inférieure du réservoir de carburant (31).

6. Véhicule du type à selle selon la revendication 5, dans lequel le tuyau d'alimentation en carburant (71) s'étend le long de l'axe (34f) de la pompe à carburant (34), passe en outre à l'intérieur du cadre de corps de véhicule (11) sur un côté de corps de véhicule, et est guidé vers la soupape d'injection de carburant (25).

7. Véhicule du type à selle selon l'une quelconque des revendications 1 à 6, dans lequel la pompe à carburant (34) comporte l'orifice d'évacuation de pompe (34a) et une partie de connexion de faisceau (34b) pour connecter un faisceau électrique d'alimentation électrique (72) pour amener du courant à un moteur électrique prévu à l'intérieur de la pompe à carburant (34),
l'orifice d'évacuation de pompe (34a) et la partie de connexion de faisceau (34b) sont prévus de manière à prendre en sandwich le support (33), et
un connecteur d'alimentation électrique (54) qui est prévu au niveau d'une partie d'extrémité distale du faisceau électrique d'alimentation électrique (72) est connecté à la partie de connexion de faisceau (34b).
